# FASCICULE DE BREVET EUROPEEN

(11) **EP 4 251 658 B1**
(45) Date de publication et mention de la délivrance du brevet: **08.01.2025**
(21) Numéro de dépôt: 21823966.3
(22) Date de dépôt: 19.11.2021
(51) Int. Cl.: C08F 10/02, C08F 4/54

(54) **CO-CATALYSEUR COMPRENANT PLUSIEURS LIAISONS CARBONE MAGNÉSIUM**
CO-KATALYSATOR MIT MEHREREN MAGNESIUMKOHLENSTOFFBINDUNGEN
CO-CATALYST COMPRISING MULTIPLE MAGNESIUM CARBON BONDS

(30) Priorité: 24.11.2020 FR 2012077
(43) Date de publication de la demande: 04.10.2023
(73) Titulaire: COMPAGNIE GENERALE DES ETABLISSEMENTS MICHELIN, 63000 Clermont-Ferrand (FR); Centre National de la Recherche Scientifique, 75794 Paris Cedex 16 (FR); Ecole Superieure de Chimie, Physique, Electronique de Lyon, 69616 Villeurbanne Cedex (FR); Université Claude Bernard Lyon 1, 69100 Villeurbanne (FR)
(72) Inventeur: BAULU, Nicolas, 63040 CLERMONT-FERRAND Cedex 9 (FR); BOISSON, Christophe, 01390 TRAMOYES (FR); D'AGOSTO, Franck, 69740 GENAS (FR); JEAN-BAPTISTE-DIT-DOMINIQUE, François, 63040 CLERMONT-FERRAND Cedex 9 (FR); NGO, Robert, 63040 CLERMONT-FERRAND Cedex 9 (FR); THUILLIEZ, Julien, 63040 CLERMONT-FERRAND Cedex 9 (FR)
(74) Mandataire: M.F.P. Michelin
(86) Numéro de dépôt international: PCT/FR2021/052043
(87) Numéro de publication internationale: WO 2022/112690

(56) Documents cités:
- WO-A2-2007/054224
- WO-A2-2007/054224
- WEHMSCHULTE RUDOLF. J. ET AL: "Synthesis and Characterization of an Unsolvated Dimeric Diarylmagnesium Compound and Its Magnesium Iodide Byproducts", INORGANIC CHEMISTRY, vol. 40, no. 23, 12 October 2001 (2001-10-12), Easton , US, pages 6004 - 6008, XP055823422, ISSN: 0020-1669, DOI: 10.1021/ic010513m
- SHIONO TAKESHI ET AL: "11. Synthesis and Application of Terminally Magnesium Bromide-Fun-ctionalized Isotactic Poly (Propene)", vol. 89, 10 March 1994 (1994-03-10) - 12 March 1994 (1994-03-12), NL, pages 119 - 128, XP055823117, ISSN: 0167-2991, Retrieved from the Internet <URL:http://dx.doi.org/10.1016/S0167-2991(08)63027-X> DOI: 10.1016/S0167-2991(08)63027-X
- WEHMSCHULTE RUDOLF. J. ET AL: "Synthesis and Characterization of an Unsolvated Dimeric Diarylmagnesium Compound and Its Magnesium Iodide Byproducts", INORGANIC CHEMISTRY, vol. 40, no. 23, 12 October 2001 (2001-10-12), Easton , US, pages 6004 - 6008, XP055823422, ISSN: 0020-1669, DOI: 10.1021/ic010513m
- SHIONO TAKESHI ET AL: "11. Synthesis and Application of Terminally Magnesium Bromide-Fun-ctionalized Isotactic Poly (Propene)", vol. 89, 10 March 1994 (1994-03-10) - 12 March 1994 (1994-03-12), NL, pages 119 - 128, XP055823117, ISSN: 0167-2991, Retrieved from the Internet <URL:http://dx.doi.org/10.1016/S0167-2991(08)63027-X> DOI: 10.1016/S0167-2991(08)63027-X

## Description

Le domaine de la présente invention est celui des composés organomagnésiens destinés à être utilisés comme co-catalyseurs dans des systèmes catalytiques à base de métallocènes de terre rare utilisés dans la préparation de polyoléfines téléchéliques.

Dans la synthèse de polyoléfines par polymérisation d'une oléfine en présence d'un système catalytique qui comprend un métallocène de terre rare, le système catalytique comprend de manière bien connue un co-catalyseur. Le co-catalyseur est utilisé pour activer le métallocène vis-à-vis de la polymérisation. Le co-catalyseur peut être un organolithien, un organomagnésien ou un organoaluminique, comme cela est par exemple décrit dans les demandes de brevet EP 1 092 731, WO 2004035639, WO 2007054224 et WO 2018224776. Lorsque le co-catalyseur est un organomagnésien, il est typiquement un chlorure d'un organomagnésien ou un organomagnésien dans lequel l'atome de magnésium est lié à deux groupes aliphatiques, comme le dibutylmagnésium, le butyléthylmagnésium et le butyloctylmagnésium.

Il est également connu que la synthèse de polyoléfines fonctionnelles à partir de ces systèmes catalytiques nécessite une étape de fonctionnalisation. Cette étape de fonctionnalisation est subséquente à la réaction de polymérisation et est mise en oeuvre par l'ajout d'un agent de modification, généralement en fin de polymérisation. Cette première méthode permet la fonctionnalisation d'une seule extrémité de chaîne du polymère. Une alternative à cette première méthode a été de proposer d'utiliser des agents de transfert fonctionnels à la place des co-catalyseurs. Ces agents de transfert fonctionnels décrits dans les demandes de brevet WO2016092237 et WO2013135314 sont par exemple des organomagnésiens qui portent une fonction amine, éther ou vinyle. Cette alternative permet bien de supprimer l'étape supplémentaire de fonctionnalisation après la réaction de polymérisation pour former des polymères fonctionnels. Mais cette alternative conduit, comme la première méthode, à la fonctionnalisation d'une seule extrémité de chaîne du polymère, à moins de procéder à une étape supplémentaire de fonctionnalisation en fin de polymérisation. Il existe donc une préoccupation de trouver une solution pour préparer des polyoléfines fonctionnalisées à ses deux extrémités de chaîne selon un procédé qui soit efficace et plus simple.

Les Demanderesses ont découvert un nouveau composé organomagnésien qui contient deux atomes de magnésium liés chacun à un atome de carbone distinct et constitutif d'un noyau benzénique distinct substitué de façon spécifique. Lorsque le nouveau composé organomagnésien est utilisé comme co-catalyseur d'un système catalytique à base d'un métallocène de terre rare dans la préparation de polymères, il donne accès à la synthèse de polymères téléchéliques par un procédé efficace et simple.

Ainsi, un objet de l'invention est un composé organomagnésien de formule (I)

R^{B}-(Mg-R^{A})ₘ-Mg-R^{B} (I)

R^{B} étant différent de R^{A},
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
R^{A} étant une chaîne divalente hydrocarbonée aliphatique, interrompue ou non par un ou plusieurs atomes d'oxygène ou de soufre ou bien par un ou plusieurs groupes arylènes,
m étant un nombre supérieur ou égal à 1, de préférence égal à 1.

### Description

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Sauf indication contraire, les taux des unités résultant de l'insertion d'un monomère dans un polymère sont exprimés en pourcentage molaire par rapport à la totalité des unités monomères qui constituent le polymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Par l'expression « à base de » utilisée pour définir les constituants du système catalytique, on entend le mélange de ces constituants, ou le produit de la réaction d'une partie ou de la totalité de ces constituants entre eux.

Le composé conforme à l'invention est un organomagnésien de formule (I) dans laquelle R^{B} est différent de R^{A}, R^{B} comprend un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle, R^{A} est une chaîne divalente hydrocarbonée aliphatique, interrompue ou non par un ou plusieurs atomes d'oxygène ou de soufre ou bien par un ou plusieurs groupes arylènes, m est un nombre supérieur ou égal à 1, de préférence égal à 1.

R^{B}-(Mg-R^{A})ₘ-Mg-R^{B} (I)

L'organomagnésien de formule (I) a donc pour caractéristique de comprendre deux atomes de magnésium, chaque atome de magnésium étant lié à deux atomes de carbone. Dans l'organomagnésien de formule (I), deux atomes de magnésium partagent chacun une première liaison avec un premier atome de carbone appartenant à R^{B} et une deuxième liaison avec un deuxième atome de carbone appartenant à R^{A}. Le premier atome de carbone est constitutif du noyau benzénique de R^{B}. Le deuxième atome de carbone est constitutif de la chaîne hydrocarbonée aliphatique R^{A} qui peut contenir au sein de sa chaîne un ou plusieurs hétéroatomes choisis parmi l'oxygène et le soufre ou bien un ou plusieurs groupes arylènes. Dans le cas préférentiel où m est égal à 1, chaque atome de magnésium partage donc une première liaison avec un premier atome de carbone de R^{B} et une deuxième liaison avec un deuxième atome de carbone de R^{A}.

R^{B} a pour caractéristique essentielle de comprendre un noyau benzénique substitué par l'atome de magnésium. Les deux atomes de carbone du noyau benzénique de R^{B} en ortho du magnésium portent un substituant, identique ou différent. Alternativement l'un des deux atomes de carbone du noyau benzénique de R^{B} en ortho du magnésium peut porter un substituant, l'autre atome de carbone du noyau benzénique de R^{B} en ortho du magnésium peut former un cycle. Le substituant est un méthyle, un éthyle ou un isopropyle. Dans le cas où l'un des 2 atomes de carbone du noyau benzénique de R^{B} en ortho du magnésium est substitué par un isopropyle, de préférence le deuxième atome de carbone du noyau benzénique de R^{B} en ortho du magnésium n'est pas substitué par un isopropyle. De préférence, les atomes de carbone du noyau benzénique de R^{B} en ortho du magnésium sont substitués par un méthyle ou un éthyle. De manière plus préférentielle, les atomes de carbone du noyau benzénique de R^{B} en ortho du magnésium sont substitués par un méthyle.

Selon un mode de réalisation préférentiel de l'invention, le composé organomagnésien répond à la formule (II-m) dans laquelle m est supérieur ou égal à 1, R₁ et R₅, identiques ou différents, représentent un méthyle ou un éthyle, de préférence un méthyle, R₂, R₃ et R₄, identiques ou différents, représentent un atome d'hydrogène ou un alkyle et R^{A} est une chaîne divalente hydrocarbonée aliphatique, interrompue ou non par un ou plusieurs atomes d'oxygène ou de soufre ou bien par un ou plusieurs groupes arylènes. De préférence, R₁ et R₅ représentent un méthyle. De préférence, R₂ et R₄ représentent un atome hydrogène.

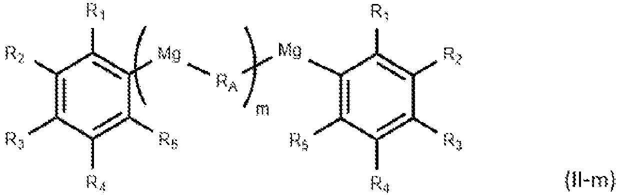

Le composé organomagnésien de formule (II-m) est de formule (II-1) dans le cas où m est égal à 1.

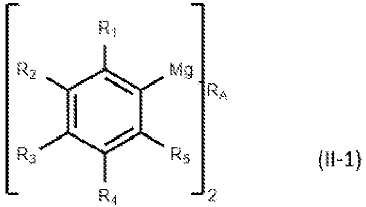

Selon une variante préférentielle, R₁, R₃ et R₅ sont identiques dans la formule (II-m), notamment dans la formule (II-1). Selon une variante plus préférentielle, R₂ et R₄ représentent un hydrogène et R₁, R₃ et R₅ sont identiques. Dans une variante davantage préférentielle, R₂ et R₄ représentent un hydrogène et R₁, R₃ et R₅ représentent un méthyle.

Dans les formules (I) et (II-m), en particulier dans la formule (II-1), R^{A} est une chaîne hydrocarbonée aliphatique divalente qui peut contenir au sein de sa chaîne un ou plusieurs hétéroatomes choisis parmi l'oxygène et le soufre ou bien un ou plusieurs groupes arylènes. De préférence, R^{A} est un alcanediyle, ramifiée ou linéaire, un cycloalcanediyle ou un radical xylènediyle. De manière plus préférentielle, R^{A} est un alcanediyle. De préférence, R^{A} contient 3 à 10 atomes de carbone, en particulier 3 à 8 atomes de carbone. De manière encore plus préférentielle, R^{A} est un alcanediyle ayant 3 à 10 atomes de carbone. Avantageusement, R^{A} est un alcanediyle ayant 3 à 8 atomes de carbone. Très avantageusement, R^{A} est un alcanediyle linéaire. Comme groupes R^{A} conviennent tout particulièrement le 1,3-propanediyle, le 1,4-butanediyle, le 1,5-pentanediyle, le 1,6-hexanediyle, le 1,7-heptanediyle, le 1,8-octanediyle.

Selon l'un quelconque des modes de réalisation de l'invention, m est préférentiellement égal à 1 dans la formule (I), en particulier dans la formule (II-m).

Le composé organomagnésien conforme à l'invention peut être préparé par un procédé, qui comprend la réaction d'un premier organomagnésien de formule XMg-R^{A}-MgX avec un deuxième organomagnésien de formule R^{B}-Mg-X, X représentant un atome d'halogène, préférentiellement de brome ou de chlore, R^{B} et R^{A} étant tels que définis précédemment. X est plus préférentiellement un atome de brome. La stoechiométrie utilisée dans la réaction détermine la valeur de m dans la formule (I) et dans la formule (II-m). Par exemple un ratio molaire de 0,5 entre la quantité du premier organomagnésien et la quantité du deuxième organomagnésien est favorable à la formation d'un composé organomagnésien de formule (I) dans laquelle m est égal à 1, alors qu'un ratio molaire supérieur à 0,5 sera davantage favorable à la formation d'un composé organomagnésien de formule (I) dans laquelle m est supérieur à 1.

Pour mettre en oeuvre la réaction du premier organomagnésien avec le deuxième organomagnésien, on ajoute typiquement une solution du deuxième organomagnésien sur une solution du premier organomagnésien. Les solutions du premier organomagnésien et du deuxième organomagnésien sont généralement des solutions dans un éther, tel que le diéthyléther, le dibutyléther, le tétrahydrofurane, le méthyltétrahydrofurane ou le mélange de deux ou plus de ces éthers. De préférence, les concentrations respectives des solutions du premier organomagnésien et du deuxième organomagnésien sont respectivement de 0,01 à 3 mol/L et de 0,02 à 5 mol/L. De manière plus préférentielle, les concentrations respectives du premier organomagnésien et du deuxième organomagnésien sont respectivement de 0,1 à 2 mol/L et de 0,2 à 4 mol/L.

Le premier organomagnésien et le deuxième organomagnésien peuvent être préparés au préalable par une réaction de Grignard à partir de magnésium métal et d'un précurseur adéquat. Pour le premier organomagnésien et le deuxième organomagnésien, les précurseurs respectifs sont de formule X-R^{A}-X et R^{B}-X, R^{A}, R^{B} et X étant tels que définis précédemment. La réaction de Grignard est mise en oeuvre typiquement par l'ajout du précurseur à du magnésium métal qui se présente généralement sous la forme de copeaux. De préférence, de l'iode (I₂) typiquement sous la forme de bille est introduit dans le réacteur avant l'ajout du précurseur afin d'activer la réaction de Grignard de manière connue.

Alternativement, le composé organomagnésien conforme à l'invention peut être préparé par réaction d'un composé organométallique de formule M-R^{A}-M et de l'organomagnésien de formule R^{B}-Mg-X, M représentant un atome de lithium, de sodium ou de potassium, X, R^{B} et R^{A} étant tels que définis précédemment. De préférence, M représente un atome de lithium, auquel cas l'organométallique de formule M-R^{A}-M est un organolithien.

La réaction de l'organolithien et de l'organomagnésien est conduite typiquement dans un éther tel que le diéthyléther, le dibutyléther, le tétrahydrofurane, le méthyltétrahydrofurane. La réaction est conduite aussi typiquement à une température allant de 0°C à 60°C. La mise en contact est réalisée de préférence à une température comprise entre 0°C et 23°C. La mise en contact du composé organométallique de formule M-R^{A}-M avec l'organomagnésien de formule R^{B}-Mg-X se fait préférentiellement par l'ajout d'une solution du composé organométallique M-R^{A}-M à une solution de l'organomagnésien R^{B}-Mg-X. La solution du composé organométallique M-R^{A}-M est généralement une solution dans un solvant hydrocarboné, de préférence n-hexane, cyclohexane ou méthylcyclohexane, la solution de l'organomagnésien R^{B}-Mg-X est généralement une solution dans un éther, de préférence le diéthyléther ou le dibutyléther. De préférence, les concentrations respectives des solutions du composé organométallique et de l'organomagnésien M-R^{A}-M et R^{B}-Mg-X sont respectivement de 0,01 à 1 mol/L et de 0,02 à 5 mol/L. De manière plus préférentielle, les concentrations respectives des solutions du composé organométallique et de l'organomagnésien M-R^{A}-M et R^{B}-Mg-X sont respectivement de 0,05 à 0,5 mol/L et de 0,2 à 3 mol/L.

Comme toute synthèse faite en présence de composés organométalliques, les synthèses décrites pour la synthèse des organomagnésiens utiles aux besoins de l'invention et pour la synthèse de l'organomagnésien conforme à l'invention, ont lieu dans des conditions anhydres sous atmosphère inerte, dans des réacteurs agités. Typiquement, les solvants et les solutions sont utilisés sous azote ou argon anhydre.

Une fois que l'organomagnésien selon l'invention est formé, il est récupéré généralement en solution après filtration conduite sous atmosphère inerte et anhydre. La solution de l'organomagnésien selon l'invention est typiquement stockée avant son utilisation dans des récipients hermétiques, par exemple des bouteilles capsulées, à une température comprise entre -25°C et 23°C.

Comme tout composé organomagnésien, le composé organomagnésien R^{B}-(Mg-R^{A})ₘ-Mg-R^{B} conforme à l'invention peut se présenter sous la forme d'une entité monomère (R^{B}-(Mg-R^{A})ₘ-Mg-R^{B})ᵢ ou sous la forme d'une entité polymère (R^{B}-(Mg-R^{A})ₘ-Mg-R^{B})ₚ, p étant un nombre entier supérieur à 1, notamment dimère (R^{B}-(Mg-R^{A})ₘ-Mg-R^{B})₂, m étant comme défini précédemment. Par ailleurs, qu'il soit sous la forme d'une entité monomère ou polymère, il peut également se présenter sous la forme d'une entité coordinée à une ou plusieurs molécules d'un solvant, de préférence d'un éther tel que le diéthyléther, le tétrahydrofurane ou le méthyltétrahydrofurane.

Le composé organomagnésien conforme à l'invention est tout particulièrement destiné à être utilisé comme co-catalyseur dans un système catalytique comprenant un complexe organométallique et utile à la polymérisation ou la copolymérisation d'oléfines ou de diènes. Le complexe organométallique est typiquement un métallocène ou un hémimétallocène de terre rare. Le composé organomagnésien conforme à l'invention a pour rôle d'activer le complexe organométallique vis-à-vis de la réaction de polymérisation, notamment dans la réaction d'amorçage de polymérisation. Il peut se substituer au co-catalyseur des systèmes catalytiques décrits par exemple dans les documents EP 1092731 A1, WO 2004035639 A1, WO 2005028526 A1, WO2007045223 A2, WO2007045224 A2. Il peut également se substituer au co-catalyseur des systèmes catalytiques dit préformés en présence d'un monomère et décrits par exemple dans les documents WO 2017093654 A1, WO 2018020122 A1, WO 2018100279 A1.

Utilisé comme co-catalyseur dans de tels systèmes catalytiques, le composé organomagnésien conforme à l'invention permet la synthèse de polymères téléchéliques de 1,3-diènes, d'éthylène ou d'α-monooléfines. On entend par α-monooléfine une α-oléfine qui a une seule double liaison carbone-carbone, les doubles liaisons dans les composés aromatiques n'étant pas prises en compte. Par exemple, le styrène est considéré comme une α-monooléfine. A titre d'α-monooléfines, on peut citer particulièrement celles ayant 3 à 18 atomes de carbone. A titre de diènes conjugués conviennent tout particulièrement les 1,3-diènes, plus particulièrement les 1,3-diènes ayant 4 à 24 atomes de carbone. De préférence, le 1,3-diène est le 1,3-butadiène, l'isoprène ou leur mélange.

Les polymères téléchéliques ont pour caractéristique essentielle de présenter à ses extrémités une liaison carbone-magnésien. Ils peuvent être représentés par la formule (III) dans laquelle R^{A} et R^{B} sont définis comme précédemment, et la dénomination poly désignant une chaîne polymère résultant de la polymérisation de diènes conjugués, notamment de 1,3-diènes, d'éthylène, d'α-monooléfines ou de leurs mélanges.

R^{B}-Mg-poly-R^{A}-poly-Mg-R^{B} (III)

Les polymères téléchéliques qui présentent à leurs extrémités une liaison carbone-magnésium ont la capacité de réagir avec un agent de modification pour donner lieu à la formation de polymères fonctionnalisés à ses extrémités. L'agent de modification est typiquement un composé connu pour réagir avec un composé ayant une liaison carbone-magnésium. A titre d'agent de modification conviennent en particulier les dihalogènes, les cétones. Les fonctions aux extrémités du polymère fonctionnalisé sont avantageusement identiques. Ainsi, par un procédé simple qui comprend une réaction de polymérisation et une réaction avec un agent de modification, l'organomagnésien conforme à l'invention utilisé en conjonction avec un métallocène donne accès à la synthèse de polymères dont les deux extrémités portent des groupes fonctionnels identiques.

Par réaction avec des composés marqués, les polymères téléchéliques qui présentent à leurs extrémités une liaison carbone-magnésium ont aussi la capacité de donner lieu à la formation de chaînes dont les deux extrémités sont marquées par un isotope, par exemple un isotope de l'atome d'hydrogène comme le deutérium. Les composés marqués sont par exemple l'eau deutérée, les composés ayant une fonction alcool deutérée. Ainsi, par un procédé simple qui comprend une réaction de polymérisation et une réaction de terminaison avec un composé protique marqué comme l'eau deutérée ou un alcool ayant une fonction alcool deutérée, l'organomagnésien conforme à l'invention utilisé en conjonction avec un métallocène donne accès à la synthèse de polymères dont les deux extrémités sont marquées par un isotope de l'atome d'hydrogène.

Par ailleurs, l'utilisation dans un système catalytique d'un composé de formule (I) dans lequel au moins un des deux atomes de carbone du noyau benzénique de R^{B} en ortho du magnésium n'est pas substitué par un isopropyle, a aussi l'avantage de conduire à des activités catalytiques élevées. Par conséquent, l'utilisation dans un système catalytique d'un organomagnésien qui est conforme à l'invention et dans lequel au moins un des deux atomes de carbone du noyau benzénique de R^{B} en ortho du magnésium n'est pas substitué par un isopropyle, permet la synthèse de polymères téléchéliques avec une haute productivité en raison d'une forte activité catalytique.

Les caractéristiques précitées de la présente invention, ainsi que d'autres, seront mieux comprises à la lecture de la description suivante des exemples de réalisation de l'invention, donnés à titre illustratif et non limitatif.

### Exemples

Exemple 1 : préparation d'un co-catalyseur conforme à l'invention, le 1,5-di(mésitylmagnésium)-pentanediyle (DMMP).

Le toluène et le 2-méthyltétrahydrofurane (MeTHF) utilisés lors des synthèses ont été distillés sur sodium/benzophénone. Les inertages sont réalisés par 3 cycles vide/argon.

Synthèse du bromure de 2-mésitylmagnésium : 4,15 g (170 mmol, 3,4 équivalents) de magnésium sont inertés dans un ballon de 250 mL muni d'une olive aimantée et surmonté d'une ampoule de coulée de 10 mL. Une bille de diiode (10 mg) est introduite sur le magnésium. 47,5 mL de MeTHF sont introduits dans le ballon sous agitation et 2,5 mL sont introduits dans l'ampoule de coulée. 7,65 mL de 2-bromomésitylène (50 mmol, 1 équivalent) dégazés et séchés sur tamis moléculaire activé sont introduits dans l'ampoule de coulée. Le ballon est chauffé à 60 °C et le 2-bromomésitylène est coulé au goutte à goutte sur le magnésium pendant 1 h. L'agitation est maintenue 3 h à 60 °C puis 12 h à 20 °C.

Aliquote de l'huile concentrée en tube de Young : ¹H NMR (C₆D₆ - 400 MHz - 298 K) δ : ppm = 7,01 (s, « a »), 2,74 (s, « b »), 2,36 (s, « c »)

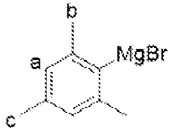

Synthèse du 1,5-di(bromure de magnésium)-pentanediyle : 6,17 g (250 mmol, 10 équivalents) de magnésium sont inertés dans un ballon de 250 mL muni d'une olive aimantée et surmonté d'une ampoule de coulée de 50 mL. Une bille de diiode (10 mg) est introduite sur le magnésium. 10 mL de MeTHF sont introduits dans le ballon sous agitation et 40 mL sont introduits dans l'ampoule de coulée. 3,41 mL de 1,5-dibromopentane (25 mmol, 1 équivalent) dégazés et séchés sur tamis moléculaire activé sont introduits dans l'ampoule de coulée. La solution d'halogénoalcane est coulée au goutte à goutte sur le magnésium pendant 1 h. L'agitation est maintenue 12 h à 20 °C.

Aliquote de l'huile concentrée en tube de Young : ¹H NMR (C₆D₆ - 400 MHz - 298 K) δ : ppm = 2,06 (quin, J = 7,6 Hz, « b »), 1,80 (quin, J = 7,4 Hz, « c »), -0,05 (t, J = 7,7 Hz, « a ») ; quin pour quintuplet.

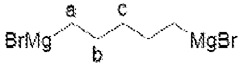

Synthèse du 1,5-di(mésitylmagnésium)-pentanediyle : La solution précédente de bromure de 2-mésitylmagnésium est canulée, c'est-à-dire transférée par l'intermédiaire d'une canule, sur la solution de 1,5-di(bromure de magnésium)-pentanediyle. 20 mL de MeTHF ainsi que 10,3 mL de 1,4-dioxane (120 mmol, 1,2 équivalent/Mg) sont introduits dans l'ampoule de coulée. Cette solution est coulée dans le ballon au goutte à goutte pendant 1 h sous vive agitation. L'agitation est maintenue 20 h à 20 °C. L'agitation est arrêtée et le ballon est mis de côté pendant 24 h afin de laisser décanter totalement les sels de MgBr₂. Le surnageant est transféré à la canule filtrante dans un tube de Schlenk inerté, lequel est équipé d'un fritté sur lequel a été placé 1 cm de célite calcinée, afin d'y être filtré. Une fois les sels éliminés, la solution jaune obtenue est concentrée sous vide jusqu'à obtention d'une huile de masse 17,88 g (23 mmol en groupement pentanediyle d'après les estimations faites par RMN ¹H). 15,75 mL de toluène sont ajoutés sur 9,1 g (11,7 mmol) de l'huile sous agitation afin d'obtenir une solution diluée de concentration 0,45 mol L⁻¹ en groupement pentanediyle. La densité de l'huile concentrée a été estimée à 1 g mL⁻¹.

Aliquote de l'huile concentrée : ¹H NMR (C₆D₆ - 500 MHz - 340 K) δ : ppm = 6,90 (s, « d »), 2,54 (s, « e »), 2,29 (s, « f »), 2,20 (quin, J = 6,5 Hz, « b »), 1,82 (quin, J = 6,0 Hz, « c »), 0,10 (t, J = 7,2 Hz, « a ») ¹³C NMR (C₆D₆ - 500 MHz - 340 K) δ : ppm = 161,00 (« g »), 148,30 (« h »), 135,18 (« i »), 125,74 (« d »), 28,53 (« b »), 28,53 (« c »), 28,11 (« e »), 21,46 (« f »), 10,22 (« a »)

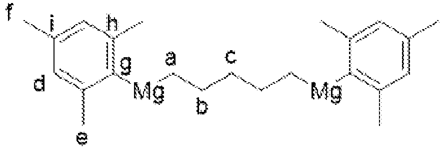

La spectroscopie RMN haute résolution des composés organométalliques et de leurs précurseurs a été effectuée sur un spectromètre Bruker 400 Avance III opérant à 400 MHz équipé d'une sonde BBFO 5 mm ou sur un spectromètre Bruker 500 Avance III opérant à 500 MHz équipé d'une sonde BBFO 5 mm. Les acquisitions sont faites à 298 K ou 340 K dans du benzène deutéré (C₆D₆). Les échantillons ont été analysés à une concentration de 5 % en masse. Les déplacements chimiques sont donnés en ppm, relativement au signal proton du C₆D₆ fixé à 7,16 ppm et au signal du carbone fixé à 128,06 ppm.

La structure des diorganomagnésiens est caractérisée par résonance magnétique nucléaire RMN 1D ¹H ¹H-¹³C HSQC ((Heteronuclear Single Quantum Cohérence), ¹H-¹³C HMBC (Heteronuclear Multiple-Bond Correlation) et NOESY. Le diorganomagnésien est analysé avec son solvant de synthèse et le benzène deutéré (C₆D₆) est ajouté à la solution pour réaliser le « lock » de la RMN.

Exemple 2 : préparation d'un co-catalyseur non conforme à l'invention, le 1,5-di(bromure de magnésium)-pentanediyle (DBMP).

9,72 g de magnésium (400 mmol, 10 équivalents), 80 mL de MeTHF (dont 64 mL dans l'ampoule de coulée), 60 mg de diiode (0,23 mmol, 0,006 équivalent) et 5,45 mL de 1,5-dibromopentane (40 mmol, 1 équivalent) ont été utilisés lors de la synthèse. La verrerie utilisée consiste en un ballon de 200 mL et une ampoule de coulée de 100 mL. Une fois la synthèse du réactif de Grignard terminée, la solution est canulée à la canule filtrante dans un second ballon de 200 mL inerté. Cette solution est concentrée sous vide puis diluée dans 55 mL de toluène. La concentration en groupement pentanediyle est estimée à 0,43 mol L⁻¹. Cette huile est non miscible dans le méthylcyclohexane. Aliquote de l'huile concentrée : ¹H NMR (Toluene-D₈ - 500 MHz - 298 K) δ : ppm = 2,21 (quin, J = 7,2 Hz, « b »), 1,88 (quin, J = 7,0 Hz, « c »), 0,11 (t, J = 7,4 Hz, « a »)

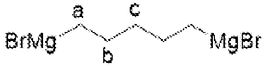

### Synthèse de polymères téléchéliques et fonctionnels :

Des homopolymères d'éthylène et des copolymères d'éthylène et de butadiène ont été préparés à partir du complexe {(Me₂Si(C₁₃H₈)₂)Nd(-BH₄)[(-BH₄)Li(THF)]}₂ et du co-catalyseur di(mésitylmagnésium) pentanediyle (DMMP) préparé selon le mode opératoire décrit précédemment. Des polymères ont été également synthétisés en utilisant un co-catalyseur non conforme à l'invention, le 1,5-di(bromure de magnésium)-pentanediyle (DBMP). Les polymères ont été caractérisés avec les méthodes décrites ci-après.

Chromatographie d'exclusion stérique haute température (SEC-HT). Les analyses de Chromatographie d'exclusion stérique à haute température (HT-SEC) ont été réalisées avec un appareil Viscotek (Malvern Instruments) équipé de 3 colonnes (PLgel Olexis 300 mm x 7 mm l. D. de Agilent Technologies) et de 3 détecteurs (réfractomètre et viscosimètre différentiels, et diffusion de la lumière). 200 µL d'une solution de l'échantillon à une concentration de 3 mg mL⁻¹ ont été élués dans le 1,2,4-trichlorobenzène en utilisant un débit de 1 mL min⁻¹ à 150 °C. La phase mobile a été stabilisée par du 2,6-di(tert-butyl)-4-méthylphénol (400 mg L⁻¹). Le logiciel OmniSEC a été utilisé pour l'acquisition et l'analyse des données. Les masses molaires des polyéthylènes synthétisés sont calculées en utilisant une courbe de calibration obtenue à partir de polyéthylènes standards (Masses molaires au pic *M*ₚ : 338, 507, 770, 1890, 17 000, 27 300, 43 400, 53 100, 65 700, 78 400 g.mol⁻¹) de Polymer Standard Service (Mainz). Les masses molaires moyennes en nombre (Mn) et en masse (Mw) des copolymères d'éthylène et de butadiène synthétisés sont calculées en utilisant une courbe de calibration universelle étalonnée à partir de polystyrènes standards (*M*ₚ : 672 à 12 000 000 g mol⁻¹) de Polymer Standard Service (Mainz) en utilisant les détecteurs réfractométrique et viscosimétrique.

Chromatographie d'exclusion stérique THF (SEC-THF). Les analyses de chromatographie d'exclusion stérique ont été réalisées avec un appareil Viscotek (Malvern Instruments). Cet appareil est équipé de 3 colonnes (SDVB, 5 µm, 300 x 7,5 mm de Polymer Standard Service), d'une colonne de garde et de 3 détecteurs (réfractomètre et viscosimètre différentiels, et diffusion de la lumière). 3 mL d'une solution de l'échantillon de concentration 3 mg mL⁻¹ dans le THF ont été filtrés sur une membrane PTFE de 0,45 µm. 100 µL de cette solution sont élués dans le THF en utilisant un débit de 1 mL min⁻¹ à une température de 35 °C. Le logiciel OmniSEC a été utilisé pour l'acquisition et l'analyse des données. Les masses molaires moyennes en nombre (Mn) et en masse (Mw) des copolymères d'éthylène et de butadiène synthétisés sont calculées en utilisant une courbe de calibration universelle obtenue à partir de polystyrènes standards (Masses molaires au pic *M*ₚ : 1 306 à 2 520 000 g mol⁻¹) de Polymer Standard Service (Mainz).

Résonance magnétique nucléaire (RMN). La spectroscopie RMN haute résolution des polymères a été effectuée sur un spectromètre Bruker 400 Avance III opérant à 400 MHz équipé d'une sonde BBFO 5 mm pour le proton et sur un spectromètre Bruker 400 Avance Il opérant à 400 MHz équipé d'une sonde PSEX ¹³C 10 mm pour le carbone. Les acquisitions sont faites à 363 K. Un mélange de tétrachloroéthylène (TCE) et benzène deutéré (C₆D₆) (2/1 v/v) a été utilisé comme solvant. Les échantillons ont été analysés à une concentration de 1 % en masse pour le proton et 5 % en masse pour le carbone. Les déplacements chimiques sont donnés en ppm, relativement au signal proton du benzène deutéré fixé à 7,16 ppm et au signal du carbone du TCE fixé à 120,65 ppm. La séquence utilisée pour l'acquisition d'un spectre ¹³C d'un polymère est : « Power gate decoupling » (spectre découplé proton avec NOE) avec un angle d'impulsion de 70 °, TD = 64 K et un délai entre les impulsions de 4,5 s. Le nombre d'acquisitions est fixé à 5120.

### Synthèse de polyéthylènes téléchéliques et fonctionnels :

### Exemple PE1 :

200 mL de toluène distillé sur sodium/benzophénone sont introduits dans un ballon de 250 mL inerté et équipé d'une olive aimantée.

2,0 mL (0,90 mmol) de 1,5-di(mésitylmagnésium)-pentanediyle préparé selon l'exemple 1 (0,45 mol L⁻¹ dans le toluène) sont introduits dans le ballon sous agitation. 8,0 mg (12,5 µmol en néodyme) de {(Me₂Si(Cᵢ₃H₈)₂)Nd(-BH₄)[(-BH₄)Li(THF)]}₂ sont ensuite introduits dans le ballon.

La solution catalytique est canulée dans un réacteur de 250 mL sous atmosphère inerte. La surpression d'argon dans le réacteur est réduite à 0,5 bar puis le réacteur est pressurisé à 4 bars d'éthylène et la température est amenée simultanément à 70 °C. La pression est maintenue constante dans le réacteur à l'aide d'un réservoir contenant de l'éthylène.

Quand la quantité d'éthylène désirée a été consommée, ici après 19 min, le réacteur est dégazé et la température est ramenée à 20 °C. 20 % de la solution de polymère sont canulés hors du réacteur, puis le polymère contenu dans ces 20% est précipité dans du méthanol sous agitation. 5,86 g (23 mmol, 16 équivalents/Mg) de diiode dissous dans 30 mL de toluène sont ajoutés à la solution polymère restant dans le réacteur. Après 3 h d'agitation, la solution polymère est versée sur du méthanol sous agitation pour précipiter le polymère.

Le polymère récupéré après la réaction avec l'agent de modification (PE1F) est filtré, lavé au méthanol, puis séché et caractérisé. Il est désigné par PE1F.

Le polymère précipité dans le méthanol avant l'ajout de l'agent de modification est également récupéré par filtration, puis séché avant d'être caractérisé comme polymère non fonctionnel (PE1NF).

1,13 g de polymère PE1F de formule I-( CH₂-CH₂)ₙ-(CH₂)₅-(CH₂-CH₂)ₙ-I et 0,25 g de polymère PE1NF de formule H-(CH₂-CH₂)ₙ-(CH₂)₅-(CH₂-CH₂)ₙ-H sont récupérés.

Le spectre de RMN proton du polymère PE1F (TCE/C₆D₆ 2/1 v/v, 400 MHz, 363 K) permet d'observer le méthylène en position α de l'iode à δ = 2,95 ppm (triplet, (CH₂CH₂)ₙ-C**H**₂I). Le taux de fonction dans le polymère PE1F est calculé en déterminant le taux de chaînes non fonctionnalisées du polymère. Le taux de chaînes non fonctionnalisées dans PE1F est déterminé en normalisant les intégrales des signaux (CH₂CH₂)ₙ des deux spectres RMN ¹H à 100, puis en divisant l'intégrale des signaux CH₃ du polymère PE1F par celle des signaux CH₃ du polymère PE1NF. Ainsi dans PE1F, 13 % des extrémités de chaîne de polymère sont non fonctionnelles, et donc 87 % des extrémités de chaîne de polymère ont été fonctionnalisées avec un atome d'iode.

### Exemple PE2

La synthèse du polymère téléchélique est similaire à celle réalisée dans l'exemple précédent PE1 à la différence près que 4,0 mL (1,80 mmol) de 1,5-di(mésitylmagnésium)-pentanediyle préparé selon l'exemple 1 (0,45 mol L⁻¹ dans le toluène) et 10,0 mg (15,6 µmol de néodyme) de {(Me₂Si(C₁₃H₈)₂)Nd(-BH₄)[(-BH₄)Li(THF)]}₂ sont utilisés pour préparer la solution catalytique.

Quand la quantité d'éthylène désirée a été consommée, ici après 46 min, le réacteur est dégazé et la température est ramenée à 20 °C. 50 % de la solution polymère est canulée hors du réacteur, puis le polymère (PE2NF) contenu dans ces 50% est précipité dans du méthanol sous agitation.

2,0 mL (44 mmol, 11 équivalents/Mg) de méthanol deutéré dilués dans 5 mL de toluène sont ajoutés à la solution polymère restant dans le réacteur. Après 1 h d'agitation, la solution polymère est versée sur du méthanol sous agitation pour précipiter le polymère PE2M.

Chaque polymère précipité est filtré, lavé au méthanol puis séché. 1,03 g de polymère PE2M : D-(CH₂-CH₂)ₙ-(CH₂)₅-(CH₂-CH₂)ₙ-D et 1,00 g de polymère PE2NF : H-(CH₂-CH₂)ₙ-(CH₂)₅-(CH₂-CH₂)ₙ-H sont récupérés.

Le spectre de RMN proton du polymère PE2M (TCE/C₆D₆ 2/1 v/v, 400 MHz, 363 K) permet d'observer le méthylène en position α du deutérium à δ = 0,83 (large, -C**H**₂D)).

Le taux de marquage dans le polymère PE2M est calculé en déterminant le taux de chaînes non marquées du polymère. Le taux de chaînes non marquées dans PE2M est déterminé en normalisant les intégrales des signaux (CH₂CH₂)ₙ des deux spectres RMN ¹³C à 100 puis en divisant l'intégrale des signaux CH₃ du polymère PE2M par celle des signaux CH₃ du polymère PE2NF. Ainsi dans PE2M, 9 % des extrémités de chaîne de polymère sont non marquées, et donc 91 % des extrémités de chaîne de polymère ont été marquées avec un atome de deutérium.

### Exemple PE3 :

La synthèse du polymère téléchélique est similaire à celle réalisée dans l'exemple précédent PE2 à la différence près que 3,0 mL (1,35 mmol) de 1,5-di(bromure de magnésium)-pentanediyle préparé selon l'exemple 2 (0,45 mol L⁻¹ dans le toluène) et 10,0 mg (15,6 µmol de néodyme) de {(Me₂Si(Cᵢ₃H_{g})₂)Nd(-BH₄)[(-BH₄)Li(THF)]}₂ sont utilisés pour préparer la solution catalytique. Le co-catalyseur utilisé est un co-catalyseur non conforme à l'invention.

Quand la quantité d'éthylène désirée a été consommée, ici après 49 min, le réacteur est dégazé et la température est ramenée à 20 °C. 40 % de la solution polymère est canulée hors du réacteur, puis le polymère contenu dans ces 40% est précipité dans du méthanol sous agitation.

2,0 mL (44 mmol, 15 équivalents/Mg) de méthanol deutéré dilués dans 5 mL de toluène sont ajoutés à la solution polymère restant dans le réacteur. Après 1 h d'agitation, la solution polymère est versée sur du méthanol sous agitation pour précipiter le polymère.

Chaque polymère est filtré, lavé au méthanol puis séché. 1,14 g de polymère PE3M : D-(CH₂-CH₂)ₙ-(CH₂)₅-(CH₂-CH₂)ₙ-D et 0,70 g de polymère PE3NF : H-(CH₂-CH₂)ₙ-(CH₂)₅-(CH₂-CH₂)ₙ-H sont récupérés. Le spectre de RMN proton du polymère PE3M (TCE/C₆D₆ 2/1 v/v, 400 MHz, 363 K) permet d'observer le méthylène en position α du deutérium à δ = 0,83 (large, -C**H**₂D)).

Le taux de marquage dans le polymère PE3M est calculé en déterminant le taux de chaînes non marquées du polymère. Le taux de chaînes non marquées dans PE3M est déterminé en normalisant les intégrales des signaux (CH₂CH₂)ₙ des deux spectres RMN ¹³C à 100 puis en divisant l'intégrale des signaux CH₃ du polymère PE3M par celle des signaux CH₃ du polymère PE3NF. Ainsi dans PE3M, 11 % des extrémités de chaîne de polymère sont non marquées, et donc 89 % des extrémités de chaîne de polymère ont été marquées avec un atome de deutérium.

Les conditions de polymérisation de l'éthylène sont reportées dans le tableau 1. Dans le tableau 1 figure aussi pour chaque exemple l'activité catalytique calculée sur toute la durée de la polymérisation et exprimée en Kg mol⁻¹ h⁻¹. Les caractéristiques des polyéthylènes synthétisés figurent dans le tableau 2. La méthode SEC-HT a été utilisée.

Synthèse de copolymères d'éthylène et de 1,3-butadiène téléchéliques et fonctionnels :

### Exemple EBR1 :

200 mL de toluène purifié sur colonne d'alumine activée (également dénommée fontaine à solvant) sont introduits dans un ballon de 250 mL inerté et équipé d'une olive aimantée. 2,2 mL (1,0 mmol) de 1,5-di(mésitylmagnésium)pentanediyle préparé selon l'exemple 1 (0,45 mol L⁻¹ dans le toluène) sont introduits dans le ballon sous agitation. 32,0 mg (50 µmol en néodyme) de {(Me₂Si(C₁₃H₈)₂)Nd(-BH₄)[(-BH₄)Li(THF)]}₂ sont ensuite introduits dans le ballon.

La solution catalytique est canulée dans un réacteur de 250 mL sous atmosphère inerte. La surpression d'argon dans le réacteur est réduite à 0,5 bar, puis le réacteur est pressurisé à 4 bars avec un mélange éthylène/butadiène 80/20 molaire et la température est amenée simultanément à 70 °C. La pression est maintenue constante dans le réacteur à l'aide d'un réservoir contenant un mélange gazeux d'éthylène/butadiène à 80/20 molaire.

Le réacteur est dégazé lorsque 10 g de monomères visés sont consommés, ici après 145 min, la température est ramenée à 20 °C.

Pour déterminer la microstructure et la macrostructure du polymère téléchélique, la solution polymère est versée sur du méthanol sous agitation pour précipiter le polymère. Le polymère est lavé au méthanol puis séché. 10,50 g de polymère sont récupérés.

### Exemple EBR2 :

La synthèse du polymère téléchélique est similaire à celle réalisée dans l'exemple précédent EBR1 à la différence près que 1,1 mL (0,5 mmol) de 1,5-di(mésitylmagnésium)pentanediyle préparé selon l'exemple 1 (0,45 mol L⁻¹ dans le toluène) sont utilisés pour préparer la solution catalytique. 10 g de monomères visés sont consommés après 112 min de polymérisation. 10,33 g de polymère sont réellement récupérés.

### Exemple EBR3 :

La synthèse du polymère téléchélique est similaire à celle réalisée dans l'exemple précédent EBR1 à la différence près que 0,55 mL (0,25 mmol) de 1,5-di(mésitylmagnésium)pentanediyle préparé selon l'exemple 1 (0,45 mol L⁻¹ dans le toluène) sont utilisés pour préparer la solution catalytique. 10 g de monomères visés sont consommés après 86 min de polymérisation. 10,66 g de polymère sont réellement récupérés.

### Exemple EBR4 :

La synthèse du polymère téléchélique est similaire à celle réalisée dans l'exemple précédent EBR1 à la différence près que 2,3 mL (1,0 mmol) de 1,5-di(bromure de magnésium)pentanediyle préparé selon l'exemple 2 (0,43 mol L⁻¹ dans le toluène) sont utilisés comme co-catalyseur pour préparer la solution catalytique. Le co-catalyseur utilisé est un co-catalyseur non conforme à l'invention. 10 g de monomères visés sont consommés après 175 min de polymérisation. 10,57 g de polymère sont récupérés.

### Exemple EBR5 :

La synthèse du polymère téléchélique est similaire à celle réalisée dans l'exemple précédent EBR4 à la différence près que 1,15 mL (0,5 mmol) de 1,5-di(bromure de magnésium)pentanediyle préparé selon l'exemple 2 (0,43 mol L⁻¹ dans le toluène) sont utilisés comme co-catalyseur pour préparer la solution catalytique. Le co-catalyseur utilisé est un co-catalyseur non conforme à l'invention. 10 g de monomères visés sont consommés après 129 min de polymérisation. 9,50 g de polymère sont réellement récupérés.

### Exemple EBR6 :

La synthèse du polymère téléchélique est similaire à celle réalisée dans l'exemple précédent EBR4 à la différence près que 0,58 mL (0,25 mmol) de 1,5-di(bromure de magnésium)pentanediyle préparé selon l'exemple 2 (0,43 mol L⁻¹ dans le toluène) sont utilisés comme co-catalyseur pour préparer la solution catalytique. Le co-catalyseur utilisé est un co-catalyseur non conforme à l'invention.

10 g de monomères visés sont consommés après 105 min de polymérisation. 10,06 g de polymère sont réellement récupérés.

Les conditions de copolymérisation de l'éthylène et du 1,3-butadiène sont reportées dans le tableau 3. L'activité catalytique exprimée en Kg mol⁻¹ h⁻¹ est mesurée pour chaque exemple à 80 minutes de polymérisation et figure dans le tableau 3. Les caractéristiques des copolymères synthétisés figurent dans le tableau 4. La méthode SEC-THF a été utilisée pour les polymères EBR1 à EBR3 ; la méthode SEC-HT a été utilisée pour les polymères EBR4 à EBR6. Le taux molaire d'éthylène et de 1,3-butadiène insérés dans la chaîne des copolymères est déterminé par RMN.

### Résultats :

Les résultats montrent que l'utilisation d'un organomagnésien conforme à l'invention comme le DMMP permet la synthèse de polymères téléchéliques par polymérisation d'une oléfine comme l'éthylène ou d'un 1,3-diène comme le 1,3-butadiène, ainsi que par leur copolymérisation. Le caractère téléchélique est montré en particulier d'une part en marquant les extrémités du polymère par réaction avec le méthanol deutéré (PE2M), d'autre part en les fonctionnalisant avec de l'iode (PE1F). Le caractère téléchélique est élevé, si l'on considère les taux de fonctions après réaction avec le diiode (87%) et si on considère le taux de polymère marqué (tableau 2, taux de marquage : 91%) et le nombre moyen d'extrémités deutérées par chaîne polymère (tableau 2, extrémité marquée par chaîne : 1,8 pour une valeur théorique de 2)

Par ailleurs, aussi bien pour la synthèse des homopolymères que pour la synthèse de copolymères, on note une activité catalytique du système catalytique qui est bien plus élevée avec l'utilisation d'un co-catalyseur conforme à l'invention qu'avec l'utilisation d'un co-catalyseur non conforme.

**Tableau 1**

| Polymère | Co-catalyseur | Ratio molaire Mg/Nd | Agent de modification ou composé pratique | Durée (min) | Activité (Kg mol⁻¹ h⁻¹) |
|---|---|---|---|---|---|
| PE1F | DMMP | 144 | diiode | 19 | 315 |
| PE1NF | DMMP | 144 | MeOH | 19 | 315 |
| PE2M | DMMP | 231 | MeOD | 46 | 172 |
| PE2NF | DMMP | 231 | MeOH | 46 | 172 |
| PE3M | DBMP | 173 | MeOD | 49 | 118 |
| PE3NF | DBMP | 173 | MeOH | 49 | 118 |

**Tableau 2**

| Polymère | Mₙ RMN (g mol⁻¹) | Mₙ SEC (g mol⁻¹) | D (Mw/Mn) | Extrémité de chaîne | Taux de fonction ou marquage (%) | Extrémité marquée par chaîne |
|---|---|---|---|---|---|---|
| PE1F | 1740 | 1640 | 1,48 | I | 87 | |
| PE1NF | 1400 | 1440 | 1,62 | H | - | |
| PE2M | 1250 | 940 | 1,45 | D | 91 | 1,82 |
| PE2NF | 1250 | 940 | 1,44 | H | - | |
| PE3M | 1630 | 1480 | 1,14 | D | 89 | 1,78 |
| PE3NF | 1630 | 1530 | 1,14 | H | - | |

**Tableau 3**

| Polymère | Co-catalyseur | Ratio molaire Mg/Nd | Composé pratique | Durée (min) | Activité (Kg mol⁻¹ h⁻¹) |
|---|---|---|---|---|---|
| EBR1 | DMMP | 40 | MeOH | 145 | 94 |
| EBR2 | DMMP | 20 | MeOH | 112 | 134 |
| EBR3 | DMMP | 10 | MeOH | 86 | 193 |
| EBR4 | DBMP | 40 | MeOH | 175 | 64 |
| EBR5 | DBMP | 20 | MeOH | 129 | 101 |
| EBR6 | DBMP | 10 | MeOH | 105 | 153 |

**Tableau 4**

| Polymère | Mₙ SEC (g mol⁻¹) | D | Extrémité de chaîne | Ethylène/1,3-butadiène (% mole) |
|---|---|---|---|---|
| EBR1 | 9800 | 1,29 | H | 79,4/20,6 |
| EBR2 | 18000 | 1,23 | H | 77,9/22,1 |
| EBR3 | 33100 | 1,29 | H | 77,5/22,5 |
| EBR4 | 13600 | 1,37 | H | 80,1/19,9 |
| EBR5 | 20000 | 1,44 | H | 80,0/20,0 |
| EBR6 | 35620 | 1,65 | H | 79,9/20,1 |

## Revendications

1. Composé organomagnésien de formule (I)
R^{B}-(Mg-R^{A})ₘ-Mg-R^{B} (I)
R^{B} étant différent de R^{A},
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
R^{A} étant une chaîne divalente hydrocarbonée aliphatique, interrompue ou non par un ou plusieurs atomes d'oxygène ou de soufre ou bien par un ou plusieurs groupes arylènes,
m étant un nombre supérieur ou égal à 1, de préférence égal à 1.

2. Composé organomagnésien selon la revendication 1 dans lequel si l'un des 2 atomes de carbone du noyau benzénique de R^{B} en ortho du magnésium est substitué par un isopropyle, le deuxième atome de carbone du noyau benzénique de R^{B} en ortho du magnésium n'est pas substitué par un isopropyle.

3. Composé organomagnésien selon l'une quelconque des revendications 1 à 2 dans lequel les atomes de carbone du noyau benzénique de R^{B} en ortho du magnésium sont substitués par un méthyle ou un éthyle, de préférence un méthyle.

4. Composé organomagnésien selon l'une quelconque des revendications 1 à 3, lequel composé organomagnésien est de formule (II-m) 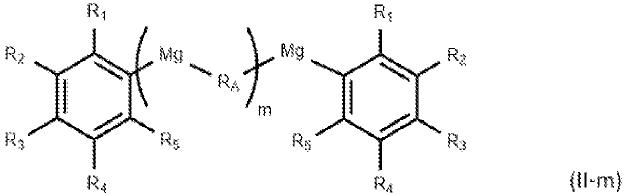 dans laquelle :
R₁ et R₅, identiques ou différents, représentent un méthyle ou un éthyle, de préférence un méthyle,
R₂, R₃ et R₄, identiques ou différents, représentent un atome d'hydrogène ou un alkyle,
R^{A} est une chaîne divalente hydrocarbonée aliphatique, interrompue ou non par un ou plusieurs atomes d'oxygène ou de soufre ou bien par un ou plusieurs groupes arylènes,
m étant un nombre supérieur ou égal à 1, de préférence égal à 1.

5. Composé organomagnésien selon la revendication 4 dans lequel R₁, R₃ et R₅ sont identiques.

6. Composé organomagnésien selon l'une quelconque des revendications 4 à 5 dans lequel R₂ et R₄ représentent un atome d'hydrogène.

7. Composé organomagnésien selon l'une quelconque des revendications 1 à 6 dans lequel R^{A} est un alcanediyle, ramifiée ou linéaire, un cycloalcanediyle ou un radical xylènediyle.

8. Composé organomagnésien selon l'une quelconque des revendications 1 à 7 dans lequel R^{A} contient 3 à 10 atomes de carbone.

9. Composé organomagnésien selon l'une quelconque des revendications 1 à 8 dans lequel R^{A} est un alcanediyle.

10. Composé organomagnésien selon l'une quelconque des revendications 1 à 9 dans lequel R^{A} représente un alcanediyle linéaire.

11. Composé organomagnésien selon l'une quelconque des revendications 1 à 10 dans lequel m est égal à 1.

## Patentansprüche

1. Organomagnesiumverbindung der Formel (I)
R^{B}-(Mg-R^{A})ₘ-Mg-R^{B} (I)
wobei R^{B} von R^{A} verschieden ist,
wobei R^{B} einen durch ein Magnesiumatom substituierten Benzolkern umfasst, wobei eines der Kohlenstoffatome des Benzolkerns in ortho-Position zu dem Magnesium durch ein Methyl, ein Ethyl oder ein Isopropyl substituiert ist oder mit dem Kohlenstoffatom, das sein nächster Nachbar ist und das in meta-Position zu dem Magnesium steht, einen Ring bildet, wobei das andere Kohlenstoffatom des Benzolkerns in ortho-Position zu dem Magnesium durch ein Methyl, ein Ethyl oder ein Isopropyl substituiert ist,
wobei R^{A} für eine zweiwertige aliphatische Kohlenwasserstoffkette, die gegebenenfalls durch ein oder mehrere Sauerstoff- oder Schwefelatome oder auch durch eine oder mehrere Arylengruppen unterbrochen ist, steht,
wobei m für eine Zahl größer oder gleich 1 und vorzugsweise gleich 1 steht.

2. Organomagnesiumverbindung nach Anspruch 1, in der dann, wenn eines der 2 Kohlenstoffatome des Benzolkerns von R^{B} in ortho-Position zu dem Magnesium durch ein Isopropyl substituiert ist, das zweite Kohlenstoffatom des Benzolkerns von R^{B} in ortho-Position zu dem Magnesium nicht durch ein Isopropyl substituiert ist.

3. Organomagnesiumverbindung nach einem der Ansprüche 1 bis 2, in der die Kohlenstoffatome des Benzolkerns von R^{B} in ortho-Position zu dem Magnesium durch ein Methyl oder ein Ethyl, vorzugsweise ein Methyl, substituiert sind.

4. Organomagnesiumverbindung nach einem der Ansprüche 1 bis 3, wobei die Organomagnesiumverbindung die Formel (II-m) aufweist: 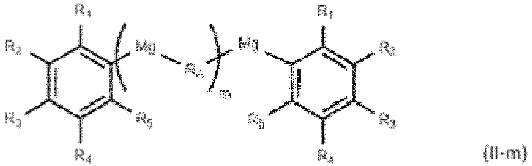 in der:
R₁ und R₅ gleich oder verschieden sind und für ein Methyl oder ein Ethyl, vorzugsweise ein Methyl, stehen, R₂, R₃ und R₄ gleich oder verschieden sind und für ein Wasserstoffatom oder ein Alkyl stehen,
R^{A} für eine zweiwertige aliphatische Kohlenwasserstoffkette, die gegebenenfalls durch ein oder mehrere Sauerstoff- oder Schwefelatome oder auch durch eine oder mehrere Arylengruppen unterbrochen ist, steht,
wobei m für eine Zahl größer oder gleich 1 und vorzugsweise gleich 1 steht.

5. Organomagnesiumverbindung nach Anspruch 4, in der R₁, R₃ und R₅ gleich sind.

6. Organomagnesiumverbindung nach einem der Ansprüche 4 bis 5, in der R₂ und R₄ für ein Wasserstoffatom stehen.

7. Organomagnesiumverbindung nach einem der Ansprüche 1 bis 6, in der R^{A} für ein verzweigtes oder lineares Alkandiyl, ein Cycloalkandiyl oder einen Xyloldiylrest steht.

8. Organomagnesiumverbindung nach einem der Ansprüche 1 bis 7, in der R^{A} 3 bis 10 Kohlenstoffatome enthält.

9. Organomagnesiumverbindung nach einem der Ansprüche 1 bis 8, in der R^{A} für ein Alkandiyl steht.

10. Organomagnesiumverbindung nach einem der Ansprüche 1 bis 9, in der R^{A} für ein lineares Alkandiyl steht.

11. Organomagnesiumverbindung nach einem der Ansprüche 1 bis 10, in der m gleich 1 ist.

## Claims

1. Organomagnesium compound of formula (I)
R^{B}-(Mg-R^{A})ₘ-Mg-R^{B} (I)
R^{B} being different from R^{A},
R^{B} comprising a benzene nucleus substituted with the magnesium atom, one of the carbon atoms of the benzene nucleus ortho to the magnesium being substituted with a methyl, an ethyl, an isopropyl or forming a ring with the carbon atom which is its closest neighbour and which is meta to the magnesium, the other carbon atom of the benzene nucleus ortho to the magnesium being substituted with a methyl, an ethyl or an isopropyl,
R^{A} being a divalent aliphatic hydrocarbon-based chain, interrupted or not with one or more oxygen or sulfur atoms or with one or more arylene groups,
m being a number greater than or equal to 1 and preferably equal to 1.

2. Organomagnesium compound according to Claim 1, in which, if one of the two carbon atoms of the benzene nucleus of R^{B} ortho to the magnesium is substituted with an isopropyl, the second carbon atom of the benzene nucleus of R^{B} ortho to the magnesium is not substituted with an isopropyl.

3. Organomagnesium compound according to either one of Claims 1 and 2, in which the carbon atoms of the benzene nucleus of R^{B} ortho to the magnesium are substituted with a methyl or an ethyl, preferably a methyl.

4. Organomagnesium compound according to any one of Claims 1 to 3, in which the organomagnesium compound is of formula (II-m) 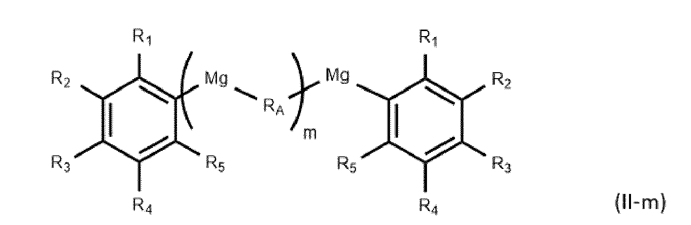 in which:
R₁ and R₅, which are identical or different, represent a methyl or an ethyl, preferably a methyl,
R₂, R₃ and R₄, which are be identical or different, represent a hydrogen atom or an alkyl,
R^{A} is a divalent aliphatic hydrocarbon-based chain, interrupted or not with one or more oxygen or sulfur atoms or with one or more arylene groups,
m being a number greater than or equal to 1 and preferably equal to 1.

5. Organomagnesium compound according to Claim 4, in which R₁, R₃ and R₅ are identical.

6. Organomagnesium compound according to either one of Claims 4 and 5, in which R₂ and R₄ represent a hydrogen atom.

7. Organomagnesium compound according to any one of Claims 1 to 6, in which R^{A} is a branched or linear alkanediyl, cycloalkanediyl or xylenediyl radical.

8. Organomagnesium compound according to any one of Claims 1 to 7, in which R^{A} contains from 3 to 10 carbon atoms.

9. Organomagnesium compound according to any one of Claims 1 to 8, in which R^{A} is an alkanediyl.

10. Organomagnesium compound according to any one of Claims 1 to 9, in which R^{A} represents a linear alkanediyl.

11. Organomagnesium compound according to any one of Claims 1 to 10, in which m is equal to 1.
